# EUROPÄISCHE PATENTANMELDUNG

(11) **EP 0 816 012 A1**
(43) Veröffentlichungstag der Anmeldung: **07.01.1998**
(21) Anmeldenummer: 97110104.3
(22) Anmeldetag: 20.06.1997
(51) Int. Cl.: B23Q 1/01

(54) **Starr-Bearbeitungszentrum**

(30) Priorität: 26.06.1996 CH 1606/96
(71) Anmelder: Starrfräsmaschinen AG, CH-9400 Rorschacherberg (CH)
(72) Erfinder: Meier, Peter, 9403 Goldach (CH)
(74) Vertreter: EGLI-EUROPEAN PATENT ATTORNEYS

(57) **Zusammenfassung**

Um eine spanabhebende Werkzeugmaschinen mit einer Werkzeughalteeinrichtung (2), einer Werkstückhalteeinrichtung (3), mindestens einer Verfahreinrichtung (25, 32), zur Ausführung von Relativbewegungen zwischen der Werkzeughalteeinrichtung und der Werkstückhalteeinrichtung, einem Gestell (1) an dem die Werkstückhalteeinrichtung, die Werkzeughalteeinrichtung und die Verfahreinrichtung angeordnet sind, und Wandelementen, die einen Bearbeitungsraum ausbilden, kompakter bauen zu können, wird erfindungsgemäss vorschlagen, diese Maschine mit Wandelementen (4, 5, 6, 7, 8, 9) zu versehen, die Bestandteil des Gestells (1) sind und so angeordnet und ausgebildet sind, dass durch diese Wandelemente (4 - 9) eine geschlossene Kastenkonstruktion entsteht, durch die bei einer Werkstückbearbeitung entstehende Belastungen aufnehmbar sind.

## Beschreibung

Die Erfindung betrifft eine spanabhebende Werkzeugmaschine, insbesondere eine Werkzeugmaschine zur Fräsbearbeitung, die eine Werkzeughalteeinrichtung, eine Werkstückhalteeinrichtung, mindestens eine Verfahreinrichtung, zur Ausführung von Relativbewegungen zwischen der Werkzeughalteeinrichtung und der Werkstückhalteeinrichtung, ein Gestell, an dem die Werkstückhalteeinrichtung, die Werkzeughalteeinrichtung und die Verfahreinrichtung angeordnet sind, und Wandelemente, die einen Bearbeitungsraum ausbilden, umfasst.

In der industriellen Produktion werden zur abtragenden Bearbeitung von Werkstücken Werkzeugmaschinen eingesetzt. Bekanntlich werden an diese Werkzeugmaschinen, wie beispielsweise Fräsmaschinen oder auch Drehmaschinen, unterschiedliche Anforderungen gestellt. So soll mit diesem Fertigungsmittel zum einen eine möglichst hohe Fertigungsgenauigkeit erzielt werden. Zum anderen soll mit derartigen Maschinen eine rationelle Fertigung möglich sein, was üblicherweise hohe Zerspanungsleistungen erfordert. Dies ist jedoch in der Regel nur mit hohen Drehzahlen und mit hohen Zerspankräften erreichbar, die sich negativ auf das Bearbeitungsergebnis der Maschine auswirken und damit die Einhaltung enger Fertigungstoleranzen erschweren. Ausserdem sollen die Maschinen zur Erzielung einer wirtschaftlichen Produktion möglichst kostengünstig sein, was in der Regel nur durch einen einfachen Aufbau erreicht werden kann. Wie unschwer zu erkennen ist, werden somit an Werkzeugmaschinen sich grundsätzlich widersprechende Anforderungen gestellt.

Um die bei Werkstückbearbeitungen auftretenden Belastungen aufnehmen zu können, werden Fräsmaschinen in der Regel schwer gebaut. Sie bestehen aus tragenden Elementen wie Betten, Ständer, Ausleger etc., die zusammen die Gestellstruktur bilden, teilweise stationär sind, teilweise sich bewegen und weitere verfahrbare Elemente, wie Schlitten, Rundachsen etc. tragen. Eine solche tragende Struktur dieser vorbekannten Werkzeugmaschinen weist somit in der Regel eine Art Stabstruktur aus Säulen und Balken auf. Auch die bewegten Elemente selbst können zur Aufnahme von Belastungen mit Stabstrukturen versehen sein. So ist es bei Bearbeitungszentren und Fräsmaschinen üblich, beispielsweise Drehachsen in einzelnen Gestellteilen, wie den bereits erwähnten Betten und Ständern, zu lagern. Gegebenenfalls können die Gestellteile auch relativ zueinander bewegt werden.

In diesem Zusammenhang ist es vorbekannt, dass diese, ausserhalb des Bearbeitungsraumes angeordneten, Teile des Gestells jeweils in sich geschlossen sind, beispielsweise durch eine kastenförmige Ausbildung. Die Drehachsen sind dabei so in ihrem jeweiligen Gestellteil gelagert, dass sie mit der an ihr angebrachten Werkzeughalterung bzw. Werkstückhalterung aus dem Gestellteil herausragen.

Um einen geschlossenen Bearbeitungsraum zu erhalten, verwendet man Kabinen aus Blechen oder durchsichtigen Materialien. Diese Wände haben die Funktion, den Personenschutz zu gewährleisten sowie Kühlschmiermittel und insbesondere Späne aufzufangen. Bei der Hochgeschwindigkeitszerspanung (HSC Bearbeitung) erhält die Arbeitsraumverkleidung durch die hohe Energiedichte eventuell berstender Werkzeuge oder Werkstücke eine zusätzliche Schutzfunktion für den Bediener und muss dementsprechend sicher ausgebildet und dimensioniert werden.

Dieses Maschinenkonzept hat jedoch den Nachteil, dass die Maschinen relativ voluminös und schwer sind. Soll eine Maschine kompakter ausfallen, so geschieht dies in der Regel durch eine Reduzierung der Gestellquerschnitte. Dadurch wird aber auch die Steifigkeit des Gestells reduziert. Im Ergebnis führt somit, wie oben bereits dargelegt wurde, eine Verringerung der Dimensionen und damit der Kosten einer Maschine zu einer geringeren Belastbarkeit und zu einer Reduzierung der erzielbaren Fertigungsgenauigkeit und Leistungsfähigkeit einer Werkzeugmaschine.

Ein hohes Gewicht der tragenden Struktur ist insbesondere dann nachteilig, wenn die betroffenen Bauteile selbst bewegt sind. Dies ist beispielsweise bei in der Bettform aufgebauten Maschinen gegeben. In diesem Fall müssen relativ grosse Massen bewegt werden, was zum einen hohe Antriebskräfte erfordert und zum anderen eine schlechte Dynamik der Maschine mit sich bringt.

Der vorliegenden Erfindung liegt deshalb die Aufgabe zugrunde, eine Werkzeugmaschine anzugeben, deren Gestell gute Steifigkeitseigenschaften aufweist, die aber kompakter ausführbar ist.

Die Aufgabe wird bei einer eingangs erwähnten Werkzeugmaschine erfindungsgemäss dadurch gelöst, dass die Wandelemente Bestandteil des Gestells und so angeordnet und ausgebildet sind, dass durch diese Wandelemente die bei einer Werkstückbearbeitung entstehenden Belastungen aufnehmbar sind.

Wie es sich überraschenderweise gezeigt hat, ist es möglich, mit diesem Aufbau des Gestells für eine spanabhebende Werkzeugmaschine die Anzahl und/oder die Grösse der Balken oder sonstiger Verstrebungen erheblich zu reduzieren. Dieser Aufbau besteht also nicht nur aus Balken, sondern auch aus Wandelementen, die so miteinander verbunden sind, dass eine geschlossene Kastenkonstruktion geschaffen wird. Um bestimmte Steifigkeitseigenschaften zu erzielen, ist bei dem erfindungsgemässen Maschinenkonzept vorteilhaft, wenn die gesamten zur Verfügung stehenden Wandflächen und nicht mehr nur einzelne Träger oder voneinander unabhängige Teile des Gestells verwendet werden. Solche tragenden Elemente können nun ganz oder zumindest teilweise vermieden werden, ohne dass Nachteile in bezug auf die statische oder dynamische Steifigkeit in Kauf genommen werden müssen. Im Gegenteil, durch die Wahl eines geeigneten Aufbaus der Wandelemente können Werkzeugmaschinen ausgebildet werden, die trotz eines kompakteren Aufbaus bessere Eigenschaften hinsichtlich der Steifigkeit des Gestells aufweisen, als dies bei vorbekannten Werkzeugmaschinen der Fall ist. Es hat sich gezeigt, dass eine gemäss der vorliegenden Erfindung ausgeführte Maschine bei vergleichbarem Arbeitsraum um rund 20% kleiner baut, als herkömmliche Maschinen.

In einer bevorzugten Ausführungsform der Erfindung besteht die tragende Struktur einer Maschine nur noch aus Wandelementen, die durch Verbindungen, wie beispielsweise Schweissungen, zueinander ortsfest angeordnet und einstückig zusammengefügt sind.

In weiteren Ausführungsformen wird das Gestell aus Grauguss oder Mineralguss hergestellt. Ausserdem kann eine geschlossene, lediglich aus Balkenelementen bestehende Rahmenstruktur vorgesehen werden, welche vorzugsweise durch Fachwerk oder andere Verstrebungsstrukturen versteift ist. Solchen Balkenelementen bzw. Verstrebungsstrukturen, an welchen beispielsweise Werkstückhalteeinrichtungen, Werkzeughalteeinrichtungen und Verfahreinrichtungen angeordnet sind und durch welche bei einer Werkstückbearbeitung entstehende Belastungen aufnehmbar sind, sind wahlweise innenseitig, zwischen den Balkenelementen bzw. aussenseitig Wandelemente zugeordnet. Auch eine beliebige Kombination der Anordnung von Wandelementen und Balkenelementen, oder das Weglassen von Wandelementen liegt im Bereich der vorliegenden Erfindung.

In bezug auf die Steifigkeit und auf das Resonanzverhalten der Maschine ist es dabei besonders vorteilhaft, wenn die Wandelemente würfel- oder quaderförmig zueinander angeordnet sind. Damit kann in dem Gestell in allen Raumrichtungen ein geschlossener Kraftfluss verwirklicht werden, durch den sich besonders erfolgreich Verwindungen des Gestells reduzieren bzw. vermeiden lassen.

Bei erfindungsgemässen Werkzeugmaschinen wird somit der Bearbeitungsraum aus tragenden Wandelementen gebildet. Das Gestell umgibt den Bearbeitungsraum allseitig. Die Werkzeug- und Werkstückhalterung befinden sich innerhalb des Gestells. Anders als bei vorbekannten Maschinenkonzepten, ist das erfindungsgemässe Gestell einer Werkzeugmaschine zweckmässigerweise einstückig ausgebildet, wobei sich alle Bewegungsachsen auf diesem Gestell abstützen. Durch dieses Maschinenkonzept kann somit eine Grundlage dafür geschaffen werden, die "bewegten Massen" einer Werkzeugmaschine möglichst klein zu halten. Um die an einer Bewegungsachse auftretenden Belastungen weiterleiten zu können, ist es nicht mehr notwendig, diese als schweres Gestellteil auszubilden, das gegenüber anderen Gestellteilen beweglich angeordnet sein muss. Ebenso müssen die Belastungen nicht mehr von einem Gestellteil in ein anderes übertragen werden.

Ein weiterer Aspekt der Erfindung, der auch unabhängig von der Ausbildung des Maschinengestells eine selbständige Bedeutung haben kann, liegt darin, dass die Führungen der Verfahreinrichtungen ausserhalb des Bearbeitungsraumes angeordnet sind. Es ist jedoch bevorzugt, diese Anordnung der Führungen in Verbindung mit einem entsprechend der Erfindung ausgebildeten Gestell vorzusehen.

Um als Auflage für Führungen verwendet zu werden, werden die Aussenflächen der Wandelemente entsprechend bearbeitet und vorbereitet. Durch die steifen bzw. verrippten Wandelemente ist es ohne zusätzlichen Aufwand möglich, die Führungen an nahezu jeder beliebigen Stelle ausserhalb des Bearbeitungsraumes anzuordnen. In bevorzugten Ausführungsformen der Erfindung sind die Führungen auf von dem Bearbeitungsraum abgewandten Aussenwänden der Wandelemente angeordnet. Dadurch wird vermieden, dass Späne oder Kühlschmiermittel auf Führungen der Verfahreinrichtungen gelangen. Ein weiterer Vorteil besteht darin, dass bei der Herstellung der Werkzeugmaschine nur leicht zugängliche Aussenflächen bearbeitet werden müssen. Komplizierte Bearbeitungen von im Inneren des Gestells angeordneten Führungen bzw. Auflageflächen von Führungen entfallen nun.

Um die Steifigkeit der Maschine weiter zu verbessern hat es sich als zweckmässig erwiesen, wenn die Werkstückhalteeinrichtung mit zumindest einer der üblicherweise drei translatorischen bzw. linearen Bewegungsachsen der Maschine antreibbar ist. Die Werkstückhalteeinrichtung ist dazu mit einer Verfahreinrichtung wirkverbunden.

In bevorzugten Ausführungsformen der Erfindung werden für die Verfahreinrichtungen Linearantriebe, wie beispielsweise magnetische Linearantriebe, eingesetzt. Wie bereits erwähnt, ist es bei dem vorliegenden Maschinenkonzept zweckmässig, wenn sämtliche Führungen und Antriebe der einzelnen Bewegungsachsen auf Aussenwänden der Wandelemente angeordnet sind. Somit ist es möglich, die in der Regel sehr schmutzempfindlichen Linearantriebe einzusetzen, ohne dass deren Funktionstüchtigkeit durch Verschmutzung, wie beispielsweise durch Späne oder Kühlschmiermittel, beeinträchtigt werden.

Weitere zweckmässige Ausgestaltungen der Erfindung ergeben sich aus den Unteransprüchen.

Die Erfindung wird anhand der in den Figuren schematisch dargestellten Ausführungsbeispielen näher erläutert; es zeigen:
- Fig. 1: eine perspektivische Darstellung einer erfindungsgemässen Werkzeugmaschine;
- Fig. 2: die Werkzeugmaschine aus Fig. 1, bei der Wandelemente teilweise gebrochen dargestellt sind;
- Fig. 3: eine Fig. 2 entsprechende Darstellung einer erfindungsgemässen Werkzeugmaschine, in der ein weiterer möglicher Aufbau der Wandelemente gezeigt ist;
- Fig. 4: die erfindungsgemässe Werkzeugmaschine aus Fig. 1 in einer anderen perspektivischen Darstellung.
- Fig. 5 a) b): zwei weitere Ausführungs formen erfindungsgemässer Werkzeugmaschinen;
- Fig. 6 a): eine Seitenansicht einer herkömmlichen Fräsmaschine ;

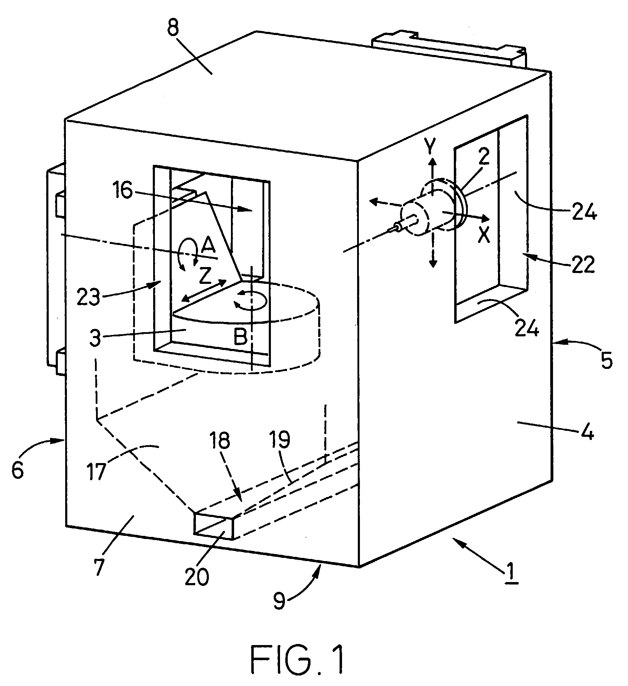

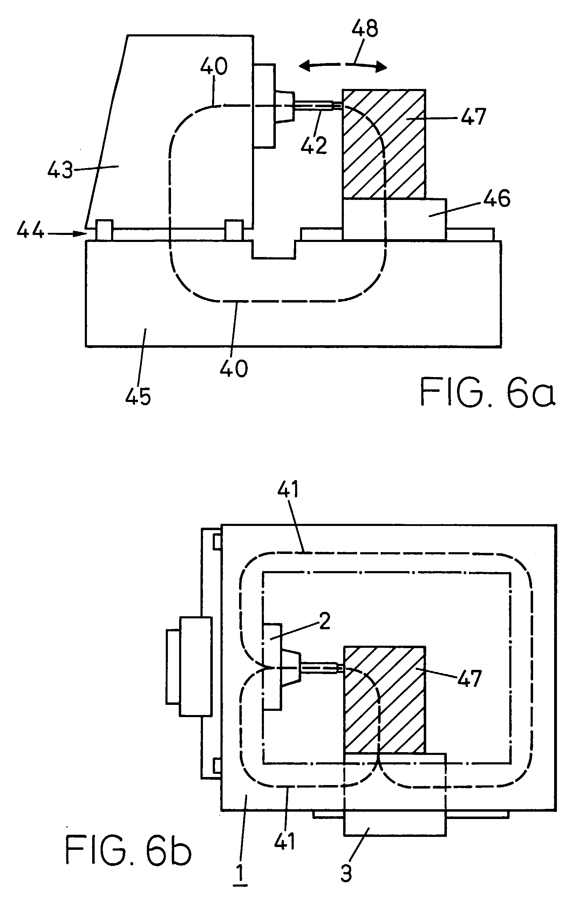

- Fig. 6 b): eine Draufsicht auf die Werkzeugmaschine aus Fig. 1.

Das in Fig. 1 dargestellte erfindungsgemässe Bearbeitungszentrum weist ein Gestell 1, eine verfahrbare Werkzeughalteeinrichtung 2 und eine verfahrbare Werkstückhalteeinrichtung 3 auf.

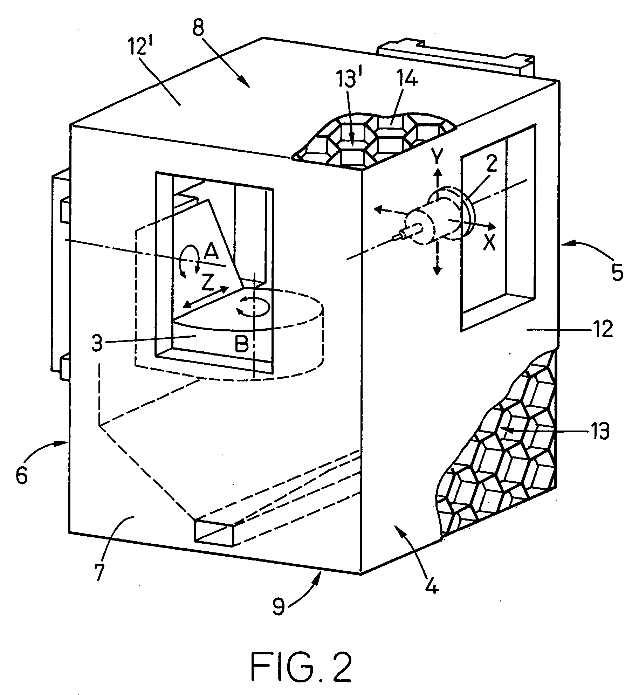

Erfindungsgemäss ist das Gestell 1 als geschlossener Kasten ausgebildet, der mit mehreren plattenförmigen Wandelementen 4, 5, 6, 7, 8, 9 versehen ist. Die Wandelemente 4-9 bestehen im wesentlichen aus verrippten Hohlkörpern. In Fig. 2 ist ein möglicher Aufbau dieser Wandelemente 4 -9 gezeigt. Wie in Fig. 2 bei den gebrochen dargestellten Wandelemente 4, 8 zu erkennen ist, bestehen die Wandelemente 4 - 9 jeweils aus zwei, beispielsweise 15 mm dicken Metallplatten 12, 13 und 12', 13', die durch in etwa gleich starke "wabenförmig" angeordnete Metallrippen 14 miteinander verbunden sind. Die Wandelemente erhalten damit eine Dicke von beispielsweise 150 bis 200 mm. Die Rippen 14 sind durch nicht dargestellte Schweissverbindungen an den jeweils im wesentlichen parallel verlaufenden Platten 12, 13 und 12', 13' des entsprechenden Wandelements befestigt. An ihren Stirnseiten werden die Wandelemente 4 - 9 durch die Platten der jeweils benachbarten Wandelemente verschlossen, was die Steifigkeit des Gestells zusätzlich erhöht. Dabei sind Rippen 14 auch jeweils an diesen benachbarten Platten angeschweisst.

Wie in Fig. 1 zu erkennen ist, sind die Wandelemente 4 - 9 in Form eines Quaders angeordnet, so dass sich an jeder Seitenfläche des Quaders ein Wandelement befindet. Die jeweilige Seitenfläche des Quaders wird vollständig durch die entsprechende äussere Platte 12, 12' des Wandelements gebildet. Entlang aneinanderstossender Kanten sind die Wandelemente 4 -9 durch Schweissungen miteinander verbunden (Fig. 2). Ausser den Wandelementen sind keine weiteren tragenden Elemente an dem Gestell 1 vorhanden.

Durch alle Innenflächen 13, 13' der Wandelemente 4 - 9 wird ein Bearbeitungsraum 16 gebildet. Somit ist der Bearbeitungsraum allseitig von dem einstückig aufgebauten und einzigen Gestellteil des Bearbeitungszentrums umschlossen. Ein Bodenelement 9 des Gestells 1 ist an seiner Innenseite unterhalb der Werkstückaufnahme mit einer schrägen Platte 17 versehen. Dieses Platte 17 dient als Rutsche für Späne und Kühlschmiermittel, die dadurch in eine kanalförmige Ausnehmung 18 gelangen. Des weiteren ist gegenüber der Platte 17 ein Blech 19 angeordnet, das ebenfalls zum Kanal 18 hin geneigt ist.

Ein nicht dargestellter Späneförderer kann die im Kanal 18 befindlichen Späne durch eine Öffnung 20 aufnehmen. Das der Werkstückhalteeinrichtung 3 gegenüberliegende Wandelement 4 kann, wie in den Fig. 1 bis 3 dargestellt ist, eine rechteckförmige Öffnung 22 für den Bediener aufweisen. An den Begrenzungsflächen der Öffnung 22 ist das Wandelement 4 durch Platten 24 verschlossen. Des weiteren ist das der Werkzeughalteeinrichtung 2 gegenüberliegende Wandelement 7 mit einer weiteren Öffnung 23 versehen, durch die zum Beispiel ein nicht dargestellter Palettenwechsler Werkstücke aus dem Bearbeitungszentrum entnimmt und noch zu bearbeitende Werkstücke an die Maschine übergibt. Durch eine weitere, ebenfalls nicht gezeigte Öffnung, die sich beispielsweise oberhalb der Spindel der Werkzeughalteeinrichtung 2 befinden kann, lassen sich Werkzeuge ein- und auswechseln, die einem (nicht dargestellten) Magazin entnommen werden. Alle diese Öffnungen sind während des Zerspanungsprozesses durch Türen verschlossen. Entsprechend den in der Praxis gestellten Anforderungen, können die beschriebenen Öffnungen in den Wandelementen wegfallen oder auch grösser ausfallen, als es in den Figuren dargestellt ist.

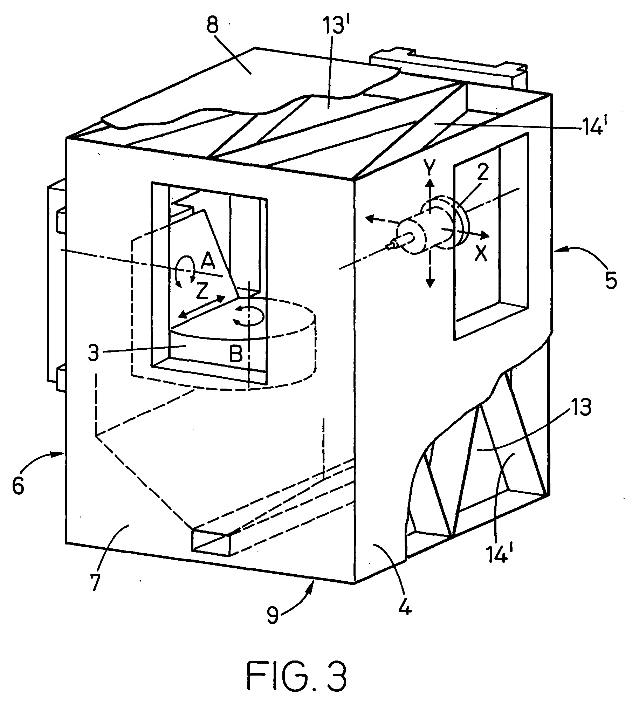

Fig. 3 zeigt eine weitere mögliche Ausbildung von Wandelementen 4 - 9. Hier wird die Aussteifung der Platten bzw. der Hohlkörper durch in den Wandelementen 4 - 9 "sägezahnförmig" angeordnete Rippen 14' erzielt. Grundsätzlich können die Versteifungsrippen in den Wandelementen 4 - 9 in nahezu beliebiger Weise angeordnet sein, sofern durch sie eine Versteifung der Hohlkörper erzielt wird. So könnten beispielsweise in einer weiteren Alternative die Versteifungen der Wandelemente 4 - 9 auch eine einem Wellblech ähnliche Gestalt aufweisen.

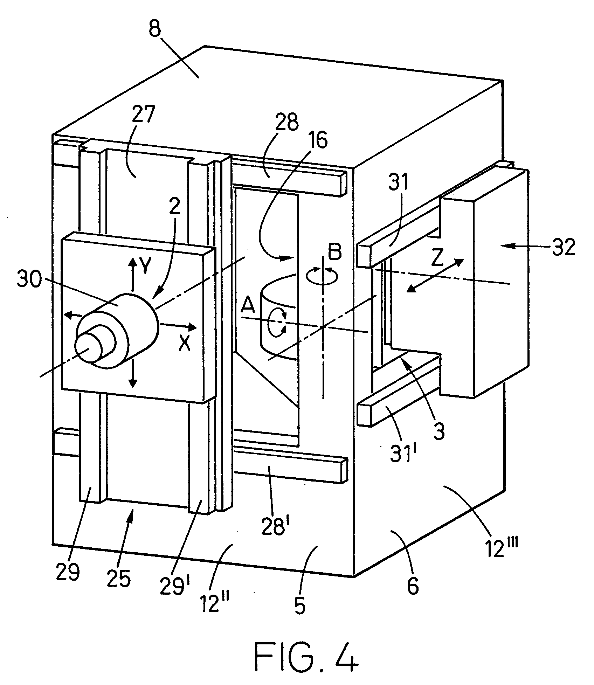

In Fig. 4 sind die bewegten Elemente des Bearbeitungszentrums zu erkennen. Die Werkzeughalteeinrichtung 2 ist entlang den beiden durch Doppelpfeile angedeuteten Bewegungsachsen X und Y verfahrbar. Dazu ist die Werkzeughalteeinrichtung 2 an einer Verfahreinrichtung 25 befestigt, die in einem rechteckigen Durchbruch des Wandelementes 5 angeordnet ist. Die Verfahreinrichtung 25 ist mit einem Kreuzschlitten 27 ausgestattet, der auf Führungsschienen 28, 28' von (nicht näher dargestellten) Linearführungen in X-Richtung translatorisch bewegbar angeordnet ist. Die Führungsschienen 28, 28' der Linearführung befinden sich dabei erfindungsgemäss ausserhalb des Bearbeitungsraums 16 auf der Aussenfläche 12'' des Wandelements 5. Ebenso sind die Führungsschienen der Y - Achse auf dem Bearbeitungsraum 16 abgewandten Seitenflächen 29, 29' des Kreuzschlittens 27 befestigt. Auch die nicht dargestellten elektrischen Antriebe des Kreuzschlittens 27 befinden sich ausserhalb des von den Wandelementen 4 - 9 gebildeten Bearbeitungsraums 16.

Ebenso ist ein Antrieb 30 für eine Drehachse (Werkzeugachse) eines in der Werkzeughalteeinrichtung 2 befindlichen Werkzeuges ebenfalls im Bereich der Aussenfläche 12'' des Wandelementes 5 angeordnet.

Die Werkstückhalteeinrichtung 3 ist mit einer Verfahreinrichtung 32 für eine weitere translatorische Bewegungsachse, der Z-Achse versehen, die zusammen mit der X- und Y-Achse ein kartesisches Koordinatensystem bildet. Auch die Verfahreinrichtung 32 für die Z-Achse weist auf der Aussenfläche 12''' des entsprechenden Wandelementes 6 angeordnete Führungsschienen 31, 31' auf. Des weiteren ist die Werkstückhalteeinrichtung 3 um zwei Drehachsen A und B drehbar angeordnet (Fig. 1 bis 3). Dabei ist die A-Achse senkrecht zur Y - Z - Ebene ausgerichtet, während die B-Achse orthogonal zur X - Z - Ebene verläuft. Die Antriebe und Medienzuführungen lassen sich so nicht nur für die Linearführungen, sondern auch für die Drehführungen ausserhalb des Arbeitsraumes anordnen.

Wie durch die obenstehenden Erläuterungen deutlich wird, sind sämtliche Elektromotoren der einzelnen Bewegungsachsen ausserhalb des abgekapselten Bearbeitungsraumes 16 angeordnet. Da hier die von den Antrieben erzeugte Wärme problemlos abführbar ist, können auf diese Wärme zurückzuführende Fertigungsungenauigkeiten, wie beispielsweise ein Wärmeverzug von Führungen, weitestgehend vermieden werden.

Die Gefahr von Fertigungsungenauigkeiten aufgrund eines Wärmeverzuges lässt sich weiter reduzieren, indem die Temperatur von vorzugsweise sämtlichen Wandelementen stabilisiert wird. Dazu können die Wandelemente mit einem Kühlmittel, insbesondere einer Kühlflüssigkeit, gefüllt sein. Durch einen in einen Kreislauf des Kühlmittels integrierten Wärmetauscher kann die im Bearbeitungsraum aufgrund der Fräsbearbeitung entstehende Wärme aus dem Bearbeitungsraum abgeleitet werden, obwohl die Maschine gekapselt ist. Durch eine solche Ausbildung lässt sich die Temperatur in dem Bearbeitungsraum regulieren.

Ebenso sind sämtliche Linearführungen ausserhalb des Bearbeitungsraums 16 auf den dem Bearbeitungsraum abgewandten Seitenflächen 12, 12', 12'', 12''' der Wandelemente 4 - 9 angeordnet. Durch diese Massnahme ist, im Gegensatz zu sonst üblichen Anordnungen der Führungen im Bearbeitungsraum, gewährleistet, dass die Führungen nicht durch Kühlschmiermittel und Späne verschmutzen.

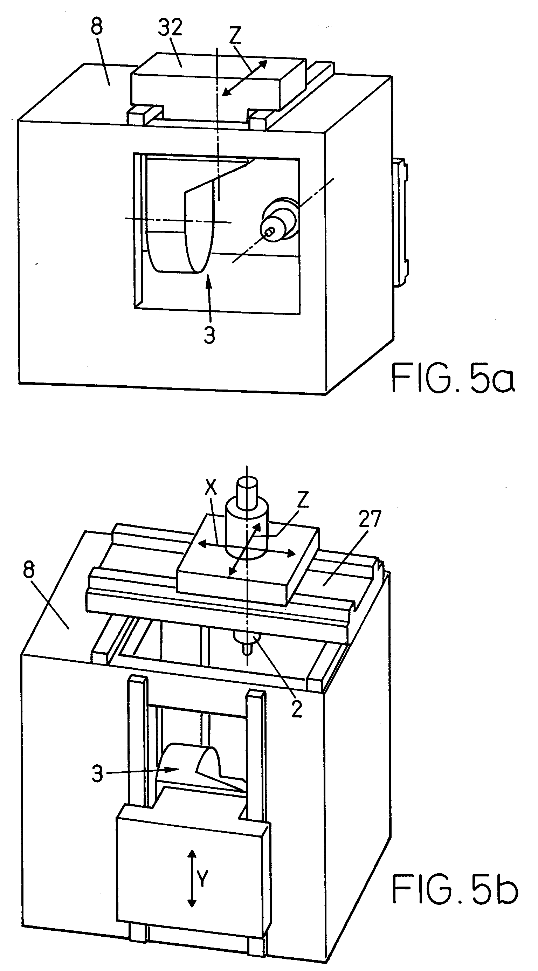

Die Fig. 5a) und 5b) zeigen weitere Ausführungsformen erfindungsgemässer Bearbeitungszentren. Im Unterschied zu den zuvor beschriebenen Maschinen sind hier die Verfahreinrichtungen an anderen Wandelementen angebracht. So ist bei dem Bearbeitungszentrum aus Fig. 5a) die Verfahreinrichtung 32 der Werkstückhalteeinrichtung 3 am Deckenelement 8 angebracht. Im Gegensatz dazu ist bei dem in Fig. 5b) dargestellten Bearbeitungszentrum der Kreuzschlitten 27 mit der Werkzeughalteeinrichtung 2 an dem entsprechenden Deckenelement 8 angeordnet. Das in dieser Figur gezeigte Bearbeitungszentrum unterscheidet sich ausserdem von den zuvor beschriebenen Bearbeitungszentren durch eine andere Zuordnung der linearen Bewegungsachsen. Hier ist die Werkzeughalteeinrichtung 2 in X- und Z-Richtung und die Werkstückhalteeinrichtung 3 in Y-Richtung verfahrbar. Entsprechend den jeweiligen Anforderungen können jedoch in anderen Aus führungsformen die Bewegungsachsen in nahezu beliebiger Weise auf die einzelnen Wandelemente und auf die Werkstück- und Werkzeughalteeinrichtung verteilt werden. In den Fig. 6a) und 6b) ist der mit Strichlinien 40, 41 angedeutete Kraftfluss in einer herkömmlichen Fräsmaschine (Fig. 6a)) dem Kraftfluss in einem erfindungsgemässen Bearbeitungszentrum (Fig. 6b)) gegenübergestellt. Wie in Fig. 6a) zu erkennen ist, verläuft in der herkömmlichen Fräsmaschine der Kraftfluss von einem Werkzeug 42 in ein erstes Gestellteil, nämlich dem Ständer 43 und von dort über Führungen 44 in ein zweites Gestellteil, einem Bett 45. Über einen Schlitten 46 gelangt der Kraftfluss in das Werkstück 47. Hierbei entsteht eine grosse Biegebelastung (durch Pfeile 48 angedeutet) auf den Ständer 43 und den Schlitten 46, der das Gestell, insbesondere das Bett 45, kaum entgegenwirken kann.

Bei der gleichen Werkstückbearbeitung in einem Bearbeitungszentrum gemäss der Erfindung werden die bei der Zerspanung entstehenden Kräfte nur in das einstückige Gestell eingeleitet. Durch die Wandelemente ergibt sich ein geschlossener Kraftfluss in dem Gestell, wodurch die Biegebelastung aufgenommen und kompensiert werden können. Verformungen des Gestells können somit weit besser vermieden werden.

## Patentansprüche

1. Werkzeugmaschine zur spanabhebenden Bearbeitung, insbesondere Werkzeugmaschine zur Fräsbearbeitung, umfassend
eine Werkzeughalteeinrichtung,
eine Werkstückhalteeinrichtung, mindestens eine Verfahreinrichtung, zur Ausführung von Relativbewegungen zwischen der Werkzeughalteeinrichtung und der Werkstückhalteeinrichtung,
ein Gestell, an dem die Werkstückhalteeinrichtung, die Werkzeughalteeinrichtung und die Verfahreinrichtung angeordnet sind, und
Wandelemente, die einen Bearbeitungsraum ausbilden,
dadurch gekennzeichnet, dass
die Wandelemente (4, 5, 6, 7, 8, 9) Bestandteil des Gestells (1) sind und so angeordnet und ausgebildet sind, dass durch diese Wandelemente (4 - 9) bei einer Werkstückbearbeitung entstehende Belastungen aufnehmbar sind.

2. Werkzeugmaschine nach Anspruch 1, dadurch gekennzeichnet, dass die als tragende Elemente ausgebildeten Wandelemente (4 - 9) einstückige plattenförmige Elemente (12, 12', 12'', 12''', 13, 13') umfassen.

3. Werkzeugmaschine nach Anspruch 2, dadurch gekennzeichnet, dass die Wandelemente (4 - 9) jeweils zwei zumindest abschnittsweise im wesentlichen parallel zueinander angeordnete Platten (12, 13; 12', 13') aufweisen, die durch Verstärkungsrippen (14) einstückig miteinander verbunden sind.

4. Werkzeugmaschine nach einem oder mehreren der vorhergehenden Ansprüche , gekennzeichnet durch ein balken- und/oder säulenloses Gestell (1), das zur Aufnahme von Belastungen ausschliesslich miteinander verbundene Wandelemente (4 - 9) aufweist.

5. Werkzeugmaschine nach einem oder mehreren der vorhergehenden Ansprüche, dadurch gekennzeichnet, dass die Wandelemente (4 - 9) so angeordnet sind, dass in allen Belastungsrichtungen ein geschlossener Kraftfluss vorhanden ist.

6. Werkzeugmaschine nach einem oder mehreren der vorhergehenden Ansprüche, dadurch gekennzeichnet, dass die Wandelemente (4 - 9) quader- oder würfelförmig zueinander angeordnet sind.

7. Werkzeugmaschine nach einem oder mehreren der vorhergehenden Ansprüche, dadurch gekennzeichnet, dass der Bearbeitungsraum (16) durch die das Gestell (1) bildenden Wandelemente (4 - 9) umschlossen wird.

8. Werkzeugmaschine nach einem oder mehreren der vorhergehenden Ansprüche, dadurch gekennzeichnet, dass eine Führung der mindestens einen Verfahreinrichtung auf einer ausserhalb des Bearbeitungsraums (16) angeordneten Aussenfläche (12, 12')vorgesehen ist.

9. Werkzeugmaschine, insbesondere nach Anspruch 8, dadurch gekennzeichnet, dass die Führungen aller linearen Bewegungsachsen (X, Y, Z) der Verfahreinrichtungen (25, 32) ausserhalb des Bearbeitungsraums (16) angeordnet sind.

10. Werkzeugmaschine nach Anspruch 1 oder 9, dadurch gekennzeichnet, dass ein Gestell (1) - an dem eine Werkstückhalteeinrichtung, eine Werkzeughalteeinrichtung und eine Verfahreinrichtung angeordnet sind - Balken umfasst, durch welche bei einer Werkstückbearbeitung entstehende Belastungen aufnehmbar sind.

11. Werkzeugmaschine nach einem oder mehreren der vorhergehenden Ansprüche, dadurch gekennzeichnet, dass ein Antrieb mindestens einer Verfahreinrichtung (25, 32, 34) ausserhalb des Bearbeitungsraumes (16) angeordnet ist.

12. Werkzeugmaschine nach einem oder mehreren der vorhergehenden Ansprüche, gekennzeichnet durch Linearantriebe für mindestens eine der Verfahreinrichtungen (25, 32).

13. Werkzeugmaschine nach einem oder mehreren der vorhergehenden Ansprüche, dadurch gekennzeichent, dass die Werkstückhalteeinrichtung mit einer Verfahreinrichtung (25, 32, 34) wirkverbunden ist, die zumindest eine translatorischen Bewegungsachse aufweist.
